# FASCICULE DE BREVET EUROPEEN

(11) **EP 2 151 634 B1**
(45) Date de publication et mention de la délivrance du brevet: **01.04.2015**
(21) Numéro de dépôt: 09167417.6
(22) Date de dépôt: 06.08.2009
(51) Int. Cl.: F24D 3/14

(54) **Attache de conduite tubulaire pour planchers chauffants**
Rohrhalterung für Fussbodenheizungen
Tube mounting for floor heatings

(30) Priorité: 06.08.2008 FR 0804494
(43) Date de publication de la demande: 10.02.2010
(73) Titulaire: RAM CHEVILLES ET FIXATIONS, 91320 Wissous (FR)
(72) Inventeur: Sergent, Gilbert, 13610 Le Puy-Sainte-Réparade (FR)
(74) Mandataire: Bertrand, Didier

(56) Documents cités:
- DE-A1- 10 109 962
- DE-U1- 29 812 237

## Description

La présente invention se rapporte à une attache de conduite tubulaire, notamment pour les planchers chauffants à basse température.

Ce type de planchers chauffants est réalisé en formant tout d'abord une première chape de béton que l'on recouvre d'une couche d'un support synthétique, du type mousse de polymères, par exemple en polyuréthane. Bien qu'alvéolée, cette couche est relativement dense pour pouvoir supporter une seconde chape de béton par dessus. Par ailleurs, un réseau de conduites tubulaires est fixé sur cette couche synthétique pour faire circuler un fluide caloporteur et notamment de l'eau chaude. Après que les conduites tubulaires ont été fixées sur cette couche synthétique, l'ensemble est recouvert de la chape de béton précitée pour noyer les conduites dans le béton et former le plancher d'un seul bloc.

Par ailleurs, les conduites tubulaires sont par exemple réalisées en polyéthylène réticulé et bien que flexibles, il est nécessaire de les maintenir sur le support synthétique avec des attaches pour les conformer suivant des courbures prédéterminées. Ainsi, au fur et à mesure que la conduite tubulaire est déroulée et appliquée sur le support synthétique en empruntant un chemin prédéfini, elle est agrafée sur ce support au moyen d'agrafes formant attache. Cet agrafage est réalisé au moyen d'une agrafeuse adaptée. Les agrafes présentent une forme de cavalier dont les deux pointes sont équipées d'ailettes anti-retour, et elles sont enfoncées à force et à cheval sur la conduite tubulaire à travers le support synthétique. Les pointes viennent alors s'ancrer dans ce support et les ailettes anti-retour, tel un harpon, viennent limiter les capacités d'extraction de l'agrafe. En effet, les forces résiduelles persistant dans la conduite déroulée tendent, dans certaines circonstances, à provoquer l'extraction des agrafes.

On pourra notamment se référer au document DE 42 12 113, lequel décrit un tel type d'agrafes.

On pourra également se reporter au document DE 298 12 237 U où les ailettes anti-retour sont doublées sans pour autant résoudre le problème. Toutefois, le document DE 298 12 237 U divulgue toutes les caractéristiques du préambule de la revendication 1.

Toutefois, il a été observé, que malgré les ailettes anti-retour, lorsque la conduite tubulaire est relativement rigide, certaines agrafes du type habituel, se désolidarisaient de la couche de support synthétique après leur pose.

Aussi, un problème qui se pose et que vise à résoudre la présente invention est de fournir une attache qui une fois ajustée à travers le support synthétique s'y maintient quelque soit la nature de la conduite tubulaire posée et les forces résiduelles qu'elle a accumulées.

Dans le but de résoudre ce problème, la présente invention propose une attache de conduite tubulaire pour plancher chauffant destinée à attacher une conduite tubulaire sur une couche de support synthétique isolant. Ladite attache comprend au moins une branche d'ancrage surmontée d'une partie d'accrochage recourbée vers ladite branche d'ancrage, ladite branche d'ancrage étant destinée à être enfoncée dans ladite couche, tandis que ladite partie d'accrochage est apte à recevoir ladite conduite tubulaire. Ladite branche d'ancrage comprend une portion formant tige prolongée par une extrémité de perforation et au moins une ailette anti-retour flexible solidaire de ladite extrémité de perforation, ladite ailette anti-retour flexible s'étendant librement en regard de ladite portion formant tige. Ladite ailette anti-retour flexible est adaptée, à fléchir en se rapprochant de ladite portion formant tige lorsque ladite branche d'ancrage est enfoncée dans ladite couche et à s'écarter de ladite portion formant tige lorsque ladite branche d'ancrage est entraînée dans un sens opposé à son enfoncement dans ladite couche. Selon l'invention, ladite branche d'ancrage comprend en outre un lien flexible qui relie ladite ailette flexible et ladite portion formant tige pour retenir ladite ailette anti-retour flexible lorsqu'elle s'écarte de ladite portion formant tige ; par quoi ladite branche d'ancrage est bloquée en translation lorsqu'elle est entraînée dans un sens opposé à son enfoncement.

Ainsi, une caractéristique de l'invention réside dans la mise en oeuvre d'un lien flexible entre l'ailette flexible et la portion formant tige, afin d'autoriser le rapprochement de l'ailette flexible de la portion formant tige lorsque cette dernière est enfoncée à travers la couche de support synthétique et aussi, de permettre de retenir l'ailette flexible lorsque cette dernière tend à s'écarter de la portion formant tige dès que cette dernière est entraînée en translation dans un sens opposé à son enfoncement sous l'effet des forces résiduelles de la conduite tubulaire. De la sorte, contrairement aux attaches de l'art antérieur, où l'ailette pouvait s'écarter de la portion formant tige, au point d'être retournée à 180° lorsque l'attache subissait un effort relativement important dans un sens opposé à la couche de support synthétique, l'attache objet de l'invention interdit cette possibilité. Car en effet, l'ailette est maintenue inclinée par rapport à la portion formant tige, en formant un angle aigu grâce au lien flexible qui la retient à la portion formant tige.

En outre, grâce au lien flexible, on prévoit de réaliser des branches d'ancrage moins rigide et par conséquent plus mince, car la résistance au retournement de l'ailette est alors directement liée à la résistance en extension du lien flexible. Or, cette résistance était conférée, pour les attaches selon l'art antérieur, par un surplus de matériau. Ainsi, grâce à cette nouvelle configuration de branche d'ancrage, il est possible de réduire la quantité de matériau nécessaire à sa réalisation et par conséquent, d'en diminuer aussi le coût.

Selon un mode de mise en oeuvre de l'invention particulièrement avantageux, ladite ailette flexible présente un amincissement situé près de ladite extrémité de perforation pour autoriser le fléchissement de ladite ailette flexible autour dudit amincissement lorsque la portion formant tige est enfoncée à travers la couche de support synthétique. Pour les attaches réalisées selon l'art antérieur, il était absolument nécessaire que cette partie maintenant amincie soit au contraire proéminente afin de résister au retournement de l'ailette. De la sorte, ce fléchissement plus aisé à l'enfoncement, permet de diminuer l'énergie d'impact sur l'attache pour pouvoir l'ancrer dans la couche de support synthétique.

Avantageusement, le lien flexible comporte une languette présentant une zone médiane articulée formant genouillère, pour autoriser de manière plus efficace encore, le pliage de ladite languette lorsque l'ailette est rapprochée de la portion formant tige durant l'enfoncement. De plus, ladite ailette flexible présente une extrémité libre d'arrêt située à l'opposé de ladite extrémité de perforation et destinée à venir s'ancrer dans l'épaisseur de la couche de support dès après l'enfoncement de la portion formant tige et sous l'effet de la relaxation du support synthétique qui subit une compression lors de l'impact. C'est aussi au cours de cette relaxation que l'ailette s'écarte sensiblement de la portion formant tige.

Par ailleurs, ladite ailette flexible s'étend en pointe de ladite extrémité libre d'arrêt jusqu'à ladite extrémité de perforation pour faciliter plus encore la pénétration de la portion formant tige à travers la couche de support synthétique.

Selon une variante de mise en oeuvre de l'invention, particulièrement avantageuse, ladite branche d'ancrage comprend deux ailettes anti-retour opposées d'une de l'autre par rapport à ladite portion formant tige. De la sorte, la résistance à l'extraction est sensiblement multipliée par deux. En outre, ladite branche d'ancrage présente une portion longitudinale en dents de scie creusée dans ladite branche pour former des crans d'arrêt de manière à augmenter plus encore la résistance à l'extraction de la branche d'ancrage du support.

Préférentiellement, l'attache selon l'invention, comprend une aile d'appui qui s'étend en saillie entre ladite branche d'ancrage et ladite partie d'accrochage recourbée pour maintenir ladite partie d'accrochage à distance de ladite couche. Ainsi, lors de l'enfoncement de la branche d'ancrage, cette dernière est stoppée dès lors que l'aile d'appui vient en contact contre la couche de support synthétique.

De plus, et selon un mode privilégié de réalisation, l'attache comprend deux branches d'ancrage en regard reliées ensemble par la seule partie d'accrochage recourbée en formant cavalier. De la sorte, l'attache est mise en oeuvre à cheval sur la conduite tubulaire, tandis que les branches d'ancrage sont solidarisées simultanément à la couche de support synthétique. En outre, l'attache selon l'invention, est moulée d'une seule pièce en matière plastique avec ledit lien flexible, ce qui permet de réaliser une attache équipée d'un lien flexible à un coût très avantageux.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de face d'une attache de conduite tubulaire conforme à l'invention, selon un premier mode de mise en oeuvre; et,
- la Figure 2 est une vue schématique en perspective de trois quarts de l'attache représentée sur la Figure 1.

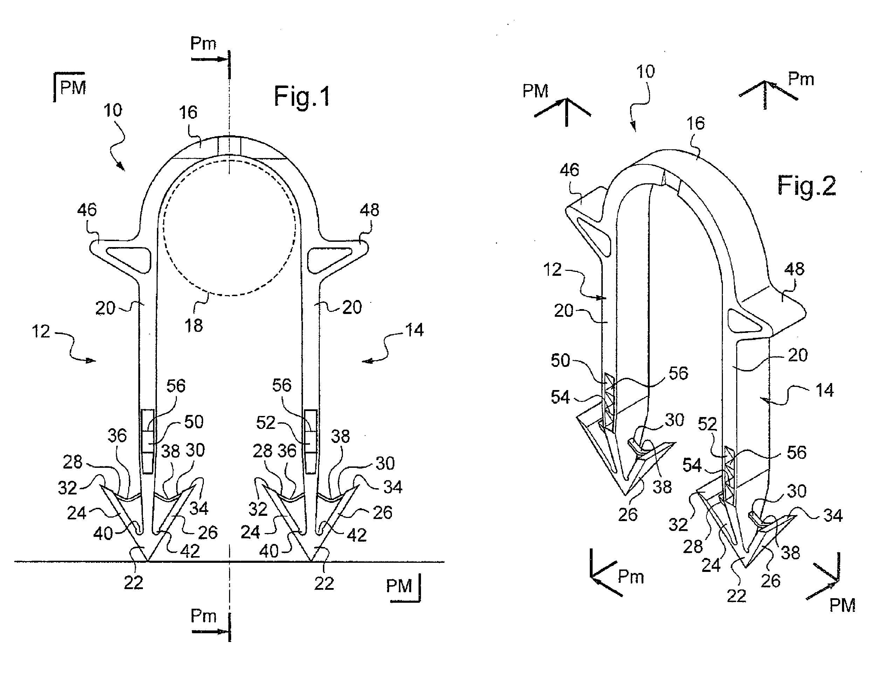

La Figure 1 illustre une attache 10 moulée d'une seule pièce en matière plastique, par exemple en polyamide ou en polyéthylène, présentant deux branches d'ancrage 12, 14 en regard et symétriques l'une de l'autre par rapport à un plan médian Pm. En outre, l'attache 10 définit un plan moyen PM. Cette attache 10 comprend une partie d'accrochage recourbée 16, en direction des branches d'ancrage 12, 14, qui forme en l'espèce un cavalier compte tenu de la symétrie des deux branches d'ancrage 12, 14. Ainsi qu'on l'expliquera plus en détail dans la suite dans la description, selon une variante de réalisation de l'invention, l'attache ne comporte qu'une seule branche d'ancrage.

Selon la variante représentée sur la Figure 1, l'attache est destinée à être installée à cheval sur une conduite tubulaire 18 illustrée en coupe et en traits interrompus, de façon à ce que la conduite tubulaire 18 vienne se loger précisément à l'intérieur de la partie d'accrochage recourbée 16, tandis que les branches ancrage 12, 14 viennent s'ancrer dans une couche d'un support synthétique isolant 19. Cette couche est par exemple réalisée en mousse de polyuréthane relativement dense. Elle est adaptée à être installée dans l'épaisseur d'un plancher chauffant et permet de l'isoler thermiquement.

Les branches d'ancrage 12, 14 comportent respectivement, une portion formant tige 20 et une extrémité de perforation 22 libre qu'elle prolonge. Elles comportent également chacune deux ailettes anti-retour flexibles 24, 26 reliées à l'extrémité de perforation 22, et qui s'étendent de manière symétrique l'une de l'autre dans le plan moyen PM de l'attache 10, en formant un angle aigu, par exemple voisin de 30°, par rapport à la portion formant tige 20. De plus, les portions formant tige 20 et les ailettes anti-retour 24, 26 correspondantes sont respectivement reliées ensemble par des liens flexibles 28, 30. Les ailettes anti-retour 24, 26 présentent respectivement une extrémité libre d'arrêt 32, 34. Elles sont reliées à la portion formant tige 20 par les liens flexibles 28, 30, qui relient respectivement ces extrémités libres d'arrêt 32, 34, et la portion formant tige 20 dans une partie correspondant sensiblement à la projection orthogonale des extrémités libres d'arrêt 32, 34 par rapport à la portion formant tige 20.

En outre, les liens flexibles 28, 30 forment des languettes présentant une zone médiane pré-pliée 36, 38 aptes à former articulation et partageant les languettes en deux demi-languettes inclinées l'une par rapport à l'autre. C'est plus précisément la nature plastique du matériau utilisé qui permet aux languettes de se replier sur elles-mêmes au niveau de leur zone médiane respective 36, 38. Au surplus, les ailettes anti-retour flexibles 24, 26 présentent un amincissement localisé 40, 42 à la jointure avec l'extrémité de perforation 22 pour faciliter le repliement de ces ailettes anti-retour flexibles 24, 26 contre la portion formant tige 20 dans les conditions que l'on décrira ci-après. De plus, et là encore, c'est la nature plastique du matériau utilisé pour réaliser l'attache qui permet de faciliter le repliement des ailettes anti-retour flexibles 24, 26. Ainsi, les ailettes anti-retour flexibles 24, 26 sont aptes à pivoter autour des amincissements localisés 40, 42 pour autoriser leur repliement contre la portion formant tige 20, tandis que les liens flexibles 28, 30 formant languettes, se replient sur eux-mêmes, la zone médiane articulée 36, 38 étant entraînée vers l'extrémité de perforation 22.

Par ailleurs, l'attache 10 comprend deux ailes d'appui opposées 46, 48 qui s'étendent en saillie respectivement entre les branches ancrage 12, 14 et la partie d'accrochage recourbée 16 dans deux sens opposés. Ainsi qu'on l'expliquera ci-après, ces deux ailes d'appui opposées 46, 48 permettent à la fois de former une portée d'appui dans la partie formant retour avec la partie d'accrochage 16, et aussi de former une butée d'enfoncement dans la partie opposée en décrochement par rapport aux branches ancrage 12, 14.

De plus, les branches d'ancrage 12, 14, présente des évidements 50, 52 creusés en dents de scie dans leurs épaisseurs et que l'on distingue clairement en perspective sur la figure 2. On retrouve sur cette figure 2, l'attache de conduite tubulaire 10 conforme à l'invention. Les évidements 50, 52 en dents de scie ménagés dans l'épaisseur des branches d'ancrage 12, 14 forment des arêtes 54 qui affleurent à la surface des branches d'ancrage 12, 14. Ces arêtes 54 délimitent une marche supérieure 56 orientée vers la partie d'accrochage recourbée 16 et sensiblement perpendiculaire aux branches d'ancrage 12, 14.

Par ailleurs, on observera d'une part, que les ailettes anti-retour flexibles 24, 26 s'étendent en pointe depuis leurs extrémités libres d'arrêt 32, 34 jusqu'à leurs extrémités de perforation 22. D'autre part, la portion formant tige 20 des branches d'ancrage 12, 14 est elle-même taillée en pointe au niveau des ailettes anti-retour flexibles 24, 26 vers l'extrémité de perforation 22.

On retrouve également sur cette figure 2, les liens flexibles 28, 30, et plus particulièrement le dernier, le premier étant caché sur la figure par la portion formant tige 20. Aussi, ces liens flexibles 28, 30 ont une section sensiblement rectangulaire et présentent une épaisseur inférieure à l'épaisseur des ailettes anti-retour flexibles 24, 26, par exemple, voisine de la moitié de l'épaisseur de ces ailettes et une largeur, par exemple, sensiblement égal au double de leur épaisseur.

On décrira maintenant en référence à la figure 1, le mode de mise en oeuvre de l'attache de conduite tubulaire conforme à l'invention. Ainsi, grâce à une agrafeuse adaptée, on ajuste l'attache 10 à cheval sur la conduite tubulaire 18 et les extrémités de perforation 22 en appui contre la couche de support synthétique isolant 19 à l'endroit où l'on souhaite faire passer la conduite sur cette couche 19. L'agrafeuse présente alors un dispositif qui vient prendre appui sur la partie externe de la partie d'accrochage recourbé 16 et sur les deux ailes d'appui opposées 46, 48 et qui impacte l'attache 10 sensiblement perpendiculairement à la couche 19. De la sorte, les extrémités de perforation 22 perforent la couche de support et s'y enfoncent avec la portion formant tige 20. Durant cet enfoncement, les ailettes anti-retour flexibles 24, 26 pivotent respectivement autour de leur amincissement localisé 40, 42 et se replient respectivement vers la portion formant tige 20, tandis que les liens flexibles 28, 30 se replient sur eux-mêmes au niveau de leur zone médiane 36, 38 et entre les ailettes anti-retour flexibles 24, 26 et la portion formant tige 20. On observera également que les liens flexibles 28, 30 se plient également au niveau de leurs jonctions avec les ailettes anti-retour flexibles 24, 26 respectivement et la portion formant tige 20. De la sorte, durant l'enfoncement, la section de couche de support synthétique isolant 19 perforée est réduite et par conséquent, la couche offre moins de résistance à l'enfoncement. En fin d'impact, les deux ailes d'appui opposées 46, 48 viennent s'appuyer contre la surface du support synthétique isolant 19 en le comprimant. Lorsque l'agrafeuse est retirée, la couche de support synthétique isolant 19 se relaxe et reprend sa forme initiale. Partant, l'attache 10 est entraînée en translation, sur une distance relativement faible, dans un sens opposé à l'enfoncement, par la surface de la couche de support 19 sur laquelle sont appuyées les ailes d'appui opposées 46, 48. Simultanément, et aussi des après la fin de l'impact, les ailettes anti-retour flexibles 24, 26 tendent à l'inverse, à s'écarter de la portion formant tige 20 et à se déployer vers leurs positions initiales. De la sorte, les extrémités libres d'arrêt 32, 34 écartées l'une de l'autre et de la portion formant tige 20, sont ancrées dans l'épaisseur de la couche 19 et permettent d'offrir une résistance substantielle à l'arrachement de la portion formant tige 20 de la couche de support 19. Au surplus, grâce aux liens flexibles 28, 30 qui retrouvent également leur forme dépliée, et qui retiennent les ailettes anti-retour flexibles 24, 26 par rapport à la portion formant tige 20, quand bien même la force d'arrachement serait importante, les ailettes 24, 26 conserveraient leur inclinaison d'environ 30° par rapport à la portion formant tige 20, et ne se retournerait pas à 180°. Une telle caractéristique permet d'assurer un meilleur ancrage des attaches 10 à travers la couche de support 19.

En outre, lorsque la portion formant tige 20 s'enfonce dans la couche de support synthétique 19, le matériau compressible qui la constitue tend, en se relaxant, à s'étendre à l'intérieur des évidements 50, 52 et notamment sur les marches supérieures 56. De tels évidements 50, 52 permettent également d'offrir une résistance à l'arrachement de la portion formant tige 20.

Selon un autre mode de mise en oeuvre de l'invention non représenté, l'attache de conduite tubulaire conforme à l'invention comporte une paire de branches d'ancrage telle que présentée sur les figures 1, et 2, en revanche les portions formant tige des branches d'ancrage, ne présentent chacune, qu'une seule ailette anti-retour flexible. Un tel type d'attache est prévu, lorsque la conduite tubulaire est réalisée dans un matériau relativement flexible, de sorte que les forces résiduelles après qu'il a été courbé sont relativement faibles.

Selon encore un autre mode de mise en oeuvre de l'invention non représenté, l'attache de conduite tubulaire conforme à l'invention comprend une seule branche d'ancrage et la partie d'accrochage recourbée vers la seule branche d'ancrage se prolonge par une extrémité libre formant crochet. Un tel type d'attache, est relativement moins coûteux que les types d'attaches précités, et peut s'avérer suffisant lorsque la conduite tubulaire est très flexible.

En outre, la longueur de la portion formant tige des attaches selon la présente invention, est prévue selon les épaisseurs de couche de support synthétique isolant. Ainsi, des jeux d'attaches avec des portions formant tige de différentes longueurs sont prévus.

## Revendications

1. Attache (10) de conduite tubulaire (18) pour plancher chauffant destinée à attacher une conduite tubulaire sur une couche de support synthétique (19) isolant, ladite attache comprenant au moins une branche d'ancrage (12, 14) surmontée d'une partie d'accrochage (16) recourbée vers ladite branche d'ancrage, ladite branche d'ancrage (12, 14) étant destinée à être enfoncée dans ladite couche, tandis que ladite partie d'accrochage (16) est apte à recevoir ladite conduite tubulaire (18), ladite branche d'ancrage (12, 14) comprenant une portion formant tige (20) prolongée par une extrémité de perforation (22) et au moins une ailette anti-retour flexible (24, 26) solidaire de ladite extrémité de perforation, ladite ailette anti-retour flexible (24, 26) s'étendant librement en regard de ladite portion formant tige (20), ladite ailette anti-retour flexible (24, 26) étant adaptée, à fléchir en se rapprochant de ladite portion formant tige (20) lorsque ladite branche d'ancrage est enfoncée dans ladite couche (19) et à s'écarter de ladite portion formant tige lorsque ladite branche d'ancrage (12, 14) est entraînée dans un sens opposé à son enfoncement dans ladite couche ; ladite branche d'ancrage (12, 14) comprenant en outre un lien flexible (28, 30),
**caractérisée en ce que** le lien flexible relie ladite ailette flexible (24, 26) et ladite portion formant tige (20) pour retenir ladite ailette anti-retour flexible lorsqu'elle s'écarte de ladite portion formant tige (20), par quoi ladite branche d'ancrage (12, 14) est bloquée en translation lorsqu'elle est entraînée dans un sens opposé à son enfoncement.

2. Attache selon la revendication 1, **caractérisée en ce que** ladite ailette flexible (24, 26) présente un amincissement (40, 42) situé près de ladite extrémité de perforation (22) pour autoriser le fléchissement de ladite ailette flexible autour dudit amincissement.

3. Attache selon la revendication 1 ou 2, **caractérisée en ce que** ledit lien flexible (28, 30) comporte une languette présentant une zone médiane (36, 38) articulée pour autoriser le pliage de ladite languette.

4. Attache selon l'une quelconque des revendications 1 à 3, **caractérisée en ce que** ladite ailette flexible (24, 26) présente une extrémité libre d'arrêt (32, 34) située à l'opposée de ladite extrémité de perforation (22).

5. Attache selon la revendication 4, **caractérisée en ce que** ladite ailette flexible (24, 26) s'étend en pointe de ladite extrémité libre d'arrêt (32, 34) jusqu'à ladite extrémité de perforation (22).

6. Attache selon l'une quelconque des revendications 1 à 5, **caractérisée en ce que** ladite branche d'ancrage (12, 14) comprend deux ailettes anti-retour opposées (24, 26) d'une de l'autre par rapport à ladite portion formant tige (20).

7. Attache selon l'une quelconque des revendications 1 à 6, **caractérisée en ce que** ladite branche d'ancrage (12, 14) présente une portion longitudinale en dents de scie (50, 52) creusée dans ladite branche pour former des crans d'arrêt.

8. Attache selon l'une quelconque des revendications 1 à 7, **caractérisée en ce qu'**elle comprend une aile d'appui (46, 48) qui s'étend en saillie entre ladite branche d'ancrage (12, 14) et ladite partie d'accrochage recourbée (16) pour maintenir ladite partie d'accrochage recourbée à distance de ladite couche (19).

9. Attache selon l'une quelconque des revendications 1 à 8, **caractérisée en ce qu'**elle comprend deux branches d'ancrage (12, 14) en regard reliées ensemble par la seule partie d'accrochage recourbée (16) en formant cavalier.

10. Attache selon l'une quelconque des revendications 1 à 9, **caractérisée en ce qu'**elle est moulée d'une seule pièce en matière plastique avec ledit lien flexible (28,30).

## Patentansprüche

1. Halterung (10) für Rohrleitungen (18) für eine Fußbodenheizung, die dazu bestimmt ist, eine Rohrleitung auf einer dämmenden, synthetischen Trägerschicht (19) zu halten, wobei die Halterung mindestens einen Verankerungsschenkel (12, 14) umfasst, der von einem Aufhängungsabschnitt (16), der in Richtung des Verankerungsschenkels gebogen ist, überragt wird, wobei der Verankerungsschenkel (12, 14) dazu bestimmt ist, in der Schicht versenkt zu werden, während der Aufhängungsabschnitt (16) dazu geeignet ist, die Rohrleitung (18) aufzunehmen, wobei der Verankerungsschenkel (12, 14) einen einen Schaft (20) bildenden Abschnitt, der durch ein Perforationsende (22) verlängert ist, und mindestens eine mit dem Perforationsende (22) kraftschlüssig verbundene bzw. einstückig ausgebildete elastische Rückhalterippe (24, 26) umfasst, wobei die elastische Rückhalterippe (24, 26) sich frei gegenüber dem einen Schaft (20) bildenden Abschnitt erstreckt, wobei die Rückhalterippe (24, 26) angepasst ist, sich zu verbiegen und an den einen Schaft (20) bildenden Abschnitt anzunähern, wenn der Verankerungsschenkel in der Schicht (19) versenkt wird, und sich von dem einen Schaft bildenden Abschnitt zu entfernen, wenn der Verankerungsschenkel (12, 14) in eine seiner Versenkung entgegengesetzte Richtung gezogen wird; wobei der Verankerungsschenkel (12, 14) überdies ein elastisches Verbindungsglied (28, 30) umfasst,
**dadurch gekennzeichnet, dass** das elastische Verbindungsglied die elastische Rückhalterippe (24, 26) und den einen Schaft (20) bildenden Abschnitt verbindet, um die Rückhalterippe elastisch zu halten, wenn sie sich von dem einen Schaft (20) bildenden Abschnitt entfernt, wodurch der Verankerungsschenkel (12, 1) in der Translationsbewegung blockiert wird, wenn er in eine seiner Versenkung entgegengesetzte Richtung gezogen wird.

2. Halterung nach Anspruch 1, **dadurch gekennzeichnet, dass** die elastische Rippe (24, 26) eine Verjüngung (40, 42) aufweist, die sich nahe dem Perforationsende (22) befindet, um die Biegung der elastischen Rückhalterippe um die Verjüngung zu gestatten.

3. Halterung nach Anspruch 1 oder 2, **dadurch gekennzeichnet, dass** das elastische Verbindungsglied (28, 30) eine Zunge umfasst, die einen gelenkigen mittleren Bereich (36, 38) aufweist, um eine Biegung der Zunge zu gestatten.

4. Halterung nach einem der Anspruche 1 bis 3, **dadurch gekennzeichnet, dass** die elastische Rippe (24, 26) ein freies Anschlagende (32, 34) aufweist, das sich gegenüberliegend dem Perforationsende (22) befindet.

5. Halterung nach Anspruch 4, **dadurch gekennzeichnet, dass** die elastische Rippe (24, 26) sich von dem freien Anschlagende (32, 34) zu dem Perforationsende (22) spitz zulaufend erstreckt.

6. Halterung nach einem der Ansprüche 1 bis 5, **dadurch gekennzeichnet, dass** der Verankerungsschenkel (12, 14) zwei einander in Bezug auf den einen Schaft (20) bildenden Abschnitt gegenüberliegende Rückhalterippen (24, 26) umfasst.

7. Halterung nach einem der Ansprüche 1 bis 6, **dadurch gekennzeichnet, dass** der Verankerungsschenkel (12, 14) einen länglichen hohlen Abschnitt mit Sägezähnen (50, 52) in dem Schenkel aufweist, um Rasten zu bilden.

8. Halterung nach einem der Ansprüche 1 bis 7, **dadurch gekennzeichnet, dass** sie einen Auflageflügel (46, 48) umfasst, der zwischen dem Verankerungsschenkel (12, 14) und dem gebogenen Aufhängungsabschnitt (16) hervorsteht, um den gebogenen Aufhängungsabschnitt von der Schicht (19) beabstandet zu halten.

9. Halterung nach einem der Ansprüche 1 bis 8, **dadurch gekennzeichnet, dass** sie zwei einander gegenüberliegende Verankerungsschenkel (12, 14) umfasst, die miteinander durch den einen gebogenen Hafterungsabschnitt (16) eine Klemme bildend verbunden sind.

10. Halterung nach einem der Ansprüche 1 bis 9, **dadurch gekennzeichnet, dass** sie einstückig aus einem Kunststoff mit dem elastischen Verbindungsglied (28, 30) gebildet ist.

## Claims

1. Mount (10) for a tube (18) for heated flooring, intended to attach a tube to an insulating synthetic support layer (19), said mount comprising at least one anchoring branch (12, 14) surmounted by a hooking part (16) curved towards said anchoring branch, said anchoring branch (12, 14) being intended to be embedded in said layer, while said hooking part (16) is able to receive said tube (18), said anchoring branch (12, 14) comprising a stem-forming portion (20) extended by a perforation end (22) and at least one flexible non-return fin (24, 26) integral with said perforation end, said flexible non-return fin (24, 26) extending freely with respect to said stem-forming portion (20), said flexible non-return fin (24, 26) being adapted to flex towards said stem-forming portion (20) when said anchoring branch is embedded in said layer (19) and to move away from said stem-forming portion when said anchoring branch (12, 14) is moved in a direction opposite to that in which it is embedded in said layer, said anchoring branch (12, 14) further comprising a flexible link (28, 30),
**characterised in that** the flexible link connects said flexible fin (24, 26) and said stem-forming portion (20) in order to restrain said flexible non-return fin when it moves away from said stem-forming portion (20), whereby said anchoring branch (12, 14) is blocked for translational movement when it is moved in a direction opposite to that in which it is embedded.

2. Mount as claimed in claim 1, **characterised in that** said flexible fin (24, 26) has a thinned region (40, 42) located close to said perforation end (22) to permit flexing of said flexible fin about said thinned region.

3. Mount as claimed in claim 1 or 2, **characterised in that** said flexible link (28, 30) comprises a tongue having a middle zone (36, 38) articulated to permit bending of said tongue.

4. Mount as claimed in any one of claims 1 to 3, **characterised in that** said flexible fin (24, 26) has a free stop end (32, 34) located opposite said perforation end (22).

5. Mount as claimed in claim 4, **characterised in that** said flexible fin (24, 26) extends into a point from said free stop end (32, 34) to said perforation end (22).

6. Mount as claimed in any one of claims 1 to 5, **characterised in that** said anchoring branch (12, 14) comprises two non-return fins (24, 26) opposing one another with respect to said stem-forming portion (20).

7. Mount as claimed in any one of claims 1 to 6, **characterised in that** said anchoring branch (12, 14) has a saw-toothed longitudinal portion (50, 52) hollowed out of said branch to form stop notches.

8. Mount as claimed in any one of claims 1 to 7, **characterised in that** it also comprises an abutment wing (46, 48) which extends protruding between said anchoring branch (12, 14) and said curved hooking part (16) in order to keep said curved hooking part away from said layer (19).

9. Mount as claimed in any one of claims 1 to 8, **characterised in that** it comprises two facing anchoring branches (12, 14) connected together by the single curved hooking part (16) to form a staple.

10. Mount as claimed in any one of claims 1 to 9, **characterised in that** it is moulded in one piece in synthetic material with said flexible link (28, 30).
